# EUROPÄISCHE PATENTANMELDUNG

(11) **EP 4 837 427 A1**
(43) Veröffentlichungstag der Anmeldung: **11.11.2026**
(21) Anmeldenummer: 25174578.2
(22) Anmeldetag: 06.05.2025
(51) Int. Cl.: A23J 3/22, A23J 3/26, A23P 20/20, A23P 30/20, A23L 33/185

(54) **VERFAHREN ZUR HERSTELLUNG EINES ALTERNATIVEN LEBENSMITTELPRODUKTS**

(71) Anmelder: Bühler AG, 9240 Uzwil (CH)
(72) Erfinder: Witschi, Friedrich, 8260 Stein am Rhein (CH); Schläpfer, Fabio, 8046 Zürich (CH); Hasler, Alexandra, 3013 Bern (CH)
(74) Vertreter: Hepp Wenger Ryffel AG

(57) **Zusammenfassung**

Die vorliegende Erfindung betrifft ein Verfahren zur Herstellung eines alternativen Lebensmittelprodukts, umfassend die Schritte des Behandelns eines Ausgangsgemisches in einer Vorrichtung (1), Herausführens eines Materialstranges (6a) aus der Vorrichtung (1), gegebenenfalls Überziehens des Materialstranges (6a, 6c) mit einer Haftschicht, des Überziehens des Materialstranges (6a, 6c) mit einer Fettschicht, des Faltens des Materialstranges (6a) zu einer geschichteten Struktur mit verschiedenen Schichtdicken, und des Komprimierens des in c) erhaltenen gefalteten Materialstranges (6b, 6d). Die vorliegende Erfindung betrifft weiterhin ein alternatives Lebensmittelprodukt (6e), vorzugsweise alternatives Fleischprodukt, erhältlich durch dieses Verfahren.

## Beschreibung

Die vorliegende Erfindung bezieht sich auf ein Verfahren zur Herstellung von alternativen Lebensmittelprodukten.

Innovative Lebensmittel, wie z. B. Produkte, die die Eigenschaften von Fleisch, Geflügel, Fisch, Meeresfrüchten oder daraus hergestellten Produkten imitieren, die auf pflanzlichen Proteinen basieren, werden im Rahmen des Nachhaltigkeitstrends immer wichtiger.

Eine große Herausforderung für die Akzeptanz solcher Produkte besteht darin, ihre Textur, ihre Nährwertqualität, ihre Farbe und ihre organoleptischen Eigenschaften (Biss) so weit wie möglich an die entsprechenden Eigenschaften echter Fleisch-, Geflügel- oder Fisch- und Meeresfrüchteprodukte anzupassen. Produkte, die mit den bekannten und auf dem Markt erhältlichen Methoden hergestellt werden, unterscheiden sich jedoch in ihrer Textur, ihrer Nährwertqualität, ihrer Farbe und ihrem Biss deutlich von echtem Fleisch. Dies gilt für die Faserigkeit ebenso wie für die Zartheit oder Saftigkeit. Generell steht jedes innovative Lebensmittelprodukt vor den gleichen Herausforderungen in Bezug auf Textur, Nährwertqualität, Farbe und Biss, um die Akzeptanz der Verbraucher zu gewährleisten.

Ein typisches Produkt, das die Eigenschaften von Fleisch, Geflügel, Fisch, Meeresfrüchten oder daraus hergestellten Produkten imitiert, wird unter Verwendung eines pflanzlichen Proteins durch ein Verfahren hergestellt, bei dem die Rohstoffe (einschließlich des pflanzlichen (pflanzlichen) Proteins) gewogen/dosiert und gemischt, gegebenenfalls vorkonditioniert, und anschließend in einem Extruder verarbeitet werden. Dabei handelt es sich um ein sehr energiereiches Verfahren, bei dem thermische Energie (Erwärmung des Extrudergehäuses und Kühlung des Wassers in einer Kühlmatrize bzw. Einleitung von Dampf in den Extruder) und mechanische Energie (spezifischer mechanischer Energieeintrag) eingebracht werden.

Vorzugsweise wird das so erhaltene Produkt aus dem Extruder durch eine Kühlungsdüse geführt und geschnitten.

In der WO 2021/032866 A1 wurde ein Verfahren beschrieben, das zur Herstellung eines geschäumten Produkts führt, das gegenüber bekannten Lebensmitteln, die Eigenschaften von Fleisch und Fisch imitieren, verbesserte Eigenschaften aufweist.

Die so erhaltenen Produkte sind aber immer noch nicht optimal hinsichtlich ihrer Annäherung an ein Original-Fleischprodukt.

Es war das Problem der vorliegenden Erfindung, ein Verfahren zur Herstellung von alternativen Lebensmittelprodukten bereitzustellen, das einem Original-Fleischprodukt mehr ähnelt.

Das obige Problem wurde durch die vorliegende Erfindung gelöst.

Im Einzelnen bezieht sich die vorliegende Erfindung auf ein Verfahren zur Herstellung eines alternativen Lebensmittelprodukts, umfassend die Schritte
a) Behandeln eines Ausgangsgemisches in einer Vorrichtung, vorzugsweise einem Extruder, durch Mischen und Kneten und gegebenenfalls Erhitzen,
b) Herausführen eines Materialstranges aus der Vorrichtung, vorzugsweise durch eine Düse oder einen Walzenspalt,
c) Gegebenenfalls Überziehen des Materialstranges mit einer Haftschicht,
d) Aufbringen einer Fettschicht auf den Materialstrang,
e) Falten des Materialstranges zu einer geschichteten Struktur mit verschiedenen Schichtdicken,
f) Komprimieren des in e) erhaltenen gefalteten Materialstranges.

Mit dem erfindungsgemässen Verfahren kann ein alternatives Lebensmittelprodukt und insbesondere ein alternatives Fleischprodukt erhalten werden, das eine irreguläre Struktur mit Schichtaufbau aufweist. Eine Fettschicht ist zwischen anderen Schichten eingebettet. Die irreguläre Struktur wird durch eine sich verändernde Schichtung und Faltung und anschliessende Komprimierung realisiert, welche während des erfindungsgemässen Verfahrens durchgeführt wird.

Somit entspricht die Struktur des alternativen Lebensmittelprodukts stark der Struktur eines Original-Fleischprodukts.

In einem ersten Schritt wird ein geeignetes Ausgangsgemisch in einer Vorrichtung, vorzugsweise einem Extruder verarbeitet. Die vorliegende Erfindung ist jedoch nicht auf den Einsatz eines Extruders eingeschränkt. Grundsätzlich kann jede Vorrichtung verwendet werden, in welchem das Ausgangsgemisch vermischt, geknetet und gegebenenfalls erhitzt werden kann.

Beispielsweise kann der erste Schritt in einem herkömmlichen Mischer und Kneter durchgeführt wird, wie dem HSM Mischer^{®} oder eine Teigwarenpresse Polymatik^{®} der Firma Bühler. Dies ist besonders dann vorteilhaft, wenn im ersten Schritt kein Erhitzen stattfinden soll.

Herkömmliche Mischer und Kneter sind mit einem Auslass ausgestattet, durch welchen das behandelte Material in Form eines Materialstrangs austritt. Vorzugsweise handelt es sich hierbei um eine Düse oder einen Walzenspalt. Erfindungsgemäss tritt ein flacher (nicht zylindrischer) Materialstrang aus.

Erfindungsgemäss bevorzugt wird im ersten Schritt ein Extruder eingesetzt. Dies ist besonders dann bevorzugt, wenn das Verfahren kontinuierlich und/oder zusätzlich ein Erhitzen des Ausgangsmaterials durchgeführt werden soll. Es kann jeder herkömmliche Extruder verwendet werden. Extruder sind in der Technik allgemein bekannt. Es wird beispielsweise auf die WO 2012/158023 A1 oder auf die Extruder, insbesondere Doppelschneckenextruder, von Bühler verwiesen. Solche Extruder haben vorzugsweise ein L/D-Verhältnis (Gesamtlänge zu Schneckendurchmesser) im Bereich von 20 bis 60, vorzugsweise 25 bis 50, besonders bevorzugt 25 bis 40. Erfindungsgemäß werden die Extruder vorzugsweise mit 100 bis 1000 U/min, besonders bevorzugt mit 300 bis 500 U/min und besonders bevorzugt mit 350 bis 400 U/min betrieben.

Geeignete Ausgangsmaterialien und Extrusionsbedingungen sind beispielsweise in der WO 2021/032866 A1, WO 2023/156681, und der WO 2023/099413 beschrieben. Erfindungsgemäss bevorzugt soll aber die Temperatur im Extruder 60°C nicht übersteigen.

Ein geeigneter Extruder umfasst mindestens eine Einheit zum Einbringen von Material in einen ersten Abschnitt des Extruders. Sollen unterschiedliche Rohstoffe in den Extruder eingebracht werden, kann mehr als eine solche Einheit vorgesehen werden. Der Extruder kann auch eine Wasser- und optional eine Dampfzufuhrleitung haben.

Der Extruder besteht aus mehreren Abschnitten, sogenannten Zylindergehäusen (barrels), in denen das Material mit Hilfe von mindestens einer rotierenden Schnecke verarbeitet und gefördert wird. Die in den verschiedenen Zylindergehäusen verwendeten Schneckenelemente können gleich sein, sind aber vorzugsweise unterschiedlich, um in den Zylindergehäusen unterschiedliche Verarbeitungsbedingungen zu schaffen.

Das Gehäuse des Extruders ist vorzugsweise temperaturgesteuert. Die Zusammensetzung wird unter Druck (meist 1 bis 60 bar, vorzugsweise 8 bis 20 bar, besonders bevorzugt 10 bis 15 bar) zu einer homogenen Mischung geknetet. Dabei wird üblicherweise eine Energie von 10 bis 120 Wh/kg, vorzugsweise 15 bis 30 Wh/kg, eingesetzt.

Am Ausgang des Extruders ist ein Auslass, vorzugsweise eine Düse vorgesehen, um das Extrudat in Form eines flachen (nicht zylindrischen) Materialstrangs auszugeben. Das Extrudat tritt durch den Ausgang des Extruders in die Düse ein.

Vorzugsweise ist zwischen dem Extruderauslass und der Düse eine Verteilereinheit vorgesehen. Die Verteilereinheit sorgt für eine gleichmäßige Verteilung des aus dem Extruderauslass austretenden Extrudats auf den einen oder die mehreren Extrudatströmungskanäle in der Düse.

In weiteren bevorzugten Ausführungsformen kann im Bereich des dem Extruder abgewandten Endes der Verteilereinheit und/oder des dem Extruder zugewandten Endes der Verteilereinheit eine Öffnung (vorzugsweise in einer Blende) angeordnet sein, mit der der oder die Verteilerkanäle verengt oder verengt werden können. Mit solchen Öffnungen lassen sich wiederum die Produkteigenschaften, insbesondere die Faserigkeit, gezielt beeinflussen; es können lange und kurze Fasern, aber auch amorphe oder homogene Strukturen erzeugt werden. Die Dicke der Öffnungen in Hauptströmungsrichtung liegt im Bereich von 0,1 bis 1,0 cm, vorzugsweise von 0,15 bis 0,9 cm, besonders bevorzugt von 0,2 bis 0,8 cm.

Durch geeignete Auswahl der Materialeigenschaften der Düse kann auch die Möglichkeit bereitgestellt werden, nach dem Düsenaustritt den extrudierten Materialstrang mit einer Oberflächenrauhigkeit zu versehen. Diese Oberflächenrauhigkeit erlaubt eine bessere Anheftung der nachfolgend aufzubringenden Schichten, der Fettschicht und gegebenenfalls der Haftschicht.

Vorzugsweise kann mit dem vorstehenden Verfahren ein Produkt hergestellt werden, das die Eigenschaften von Fleisch und Fisch und deren Rolle in der Ernährung imitiert.

Ein derartiges Produkt basiert vorzugsweise auf einem Rohstoff, welcher ein Protein umfasst, vorzugsweise ein pflanzliches Protein, Insektenprotein, Zellprotein, einschließlich Einzellerprotein, wie von Hefe, Bakterien, Mikroalgen, Pilzen, fermentierten Produkten, die aus der Fermentation mit einem der oben genannten Organismen stammen, Schimmel und dergleichen, oder eine Mischung verschiedener Proteine.

Gemäss einer bevorzugten Ausführungsform der vorliegenden Erfindung umfasst das Ausgangsgemisch ein Pflanzenprotein, vorzugsweise Erbsenprotein, und Wasser, vorzugweise in einem Verhältnis von 50-70 Gew.-% Protein zu 30-50 Gew.-% Wasser.

Im Extruder wird unter den vorstehend beschriebenen Bedingungen ein teigartiges Produkt hergestellt, das als Materialstrang aus dem Extruder herausgeführt wird. Das Herausführen erfolgt vorzugsweise unter derartigen Bedingungen, dass der herausgeführte Materialstrang eine Dicke im Bereich von 0.5 mm bis 5 mm, vorzugsweise 0.7 mm bis 4 mm, besonders bevorzugt 1 mm bis 2 mm aufweist. Die Bedingungen sind gegeben durch die Breite und Länge der Düse und die Austrittgeschwindigkeit in Abhängigkeit vom Volumenstrom. Durch ein Geschwindigkeitsdifferential zwischen Düsenaustritt und der nachstehend beschriebenen Unterlage zur Aufnahme des Materialstrangs kann die Dicke des Teiges zusätzlich eingestellt werden. Eine erhöhte Bandgeschwindigkeit eines bevorzugten Förderbands als Unterlage zieht den Teig in die Länge und reduziert die Dicke. Die Teigdicke kann so über geführte Bänder oder Walzen eingestellt werden.

Der Materialstrang wird auf eine Unterlage mit einer planaren Oberfläche herausgefördert und anschliessend zur nächsten Prozessstufe überführt. Grundsätzlich kann eine beliebige Unterlage verwendet werden, von welcher der Materialstrang anschliessend mit geeigneten Beförderungsmitteln oder manuell zur nächsten Prozessstufe transportiert werden kann. Vorzugsweise handelt es sich bei der Unterlage um ein Förderband, mit welchem der herausgeführte Materialstrang direkt zur nächsten Prozessstufe transportiert wird. Vorzugsweise wird der Materialstrang mit einer Geschwindigkeit von 2 bis 6 m/min, vorzugsweise 3 bis 5 m/min zur nächsten Prozessstufe transportiert.

Der erfindungsgemäss aus dem Extruder herausgeführte Materialstrang hat eine derartige Konsistenz, dass er auf der Oberfläche der Unterlage (vorzugsweise dem Förderband) nicht haftet, aber biegsam ist.

Gemäss einer bevorzugten Ausführungsform der vorliegenden Erfindung kann nach dem Auslass aus der im ersten Schritt verwendeten Vorrichtung, vorzugsweise nach der Düse oder dem Walzenspalt, eine Einheit zur Durchführung einer Oberflächenbehandlung bereitgestellt sein. Es kann sich hierbei vorzugsweise um einen Abstreifer oder eine Walze mit einem gewünschten Oberflächenprofil handeln. Beispielsweise kann eine Walze mit einem eingravierten Oberflächenprofil eingesetzt werden, wobei das Oberflächenprofil dem Muster der Fettverteilung in einem hochmarmorierten Stück Steak entsprechen kann. Dieses Muster kann Rillen unterschiedlicher Tiefe und mit vorzugsweise unregelmässiger Anordnung aufweisen. Grundsätzlich gibt es aber hinsichtlich des bereitstellbaren Musters keine Einschränkungen. Das Oberflächenprofil der Walze oder des Abstreifers kann regelmässig oder unregelmässig angeordnete Rillen und/oder Zacken aufweisen, um entsprechende Vertiefungen und/oder Löcher in der Oberfläche des Materialstrangs zu erzeugen.

Wird der flache Materialstrang in Kontakt mit dieser Einheit gebracht, kommt es zur Erzeugung eines entsprechenden Musters auf einer Oberfläche des Materialstrangs, indem beispielsweise das entsprechende Oberflächenprofil der Walze in die Oberfläche des Materialstrangs gepresst wird. Beispielsweise können dadurch spezifische Fett-Taschen in der Oberfläche des Materialstrangs geschaffen werden, in welche nachfolgend Fett eingebracht werden kann. Andere Stellen der Oberfläche des Materialstrangs bleiben hingegen flach beziehungsweise in ihrem Ausgangszustand, weswegen dort entsprechend weniger Fett aufgebracht wird.

Die Bedingungen zur Erzeugung eines entsprechenden Musters auf einer Oberfläche des Materialstrangs (Anpressdruck, Art des Musters, Fördergeschwindigkeit des Materialstrangs durch die Einheit) können abhängig von den Eigenschaft des Materialstrangs eingestellt werden.

Die Einheit zur Durchführung einer Oberflächenbehandlung befindet sich, sofern vorhanden, vor der nachfolgenden Prozessstufe des Aufbringens einer Haftschicht und/oder einer Fettschicht.

Gemäss einer bevorzugten Ausführungsform der vorliegenden Erfindung wird der Materialstrang in einer nächsten Prozessstufe zumindest teilweise mit einer erste Haftschicht überzogen. Vorzugsweise erfolgt die Auftragung der Haftschicht in einer Dicke von bis zu 1 mm.

Vorzugsweise wird die aufgetragene Haftschicht aus einer Haftmischung gebildet, die ein Protein, vorzugsweise Erbsenprotein, Gluten, Gelatine und gegebenenfalls Enzyme wie Transglutaminase, und/oder Polysaccharide aus Pflanzen (Bsp. Stärken, Pektine, Zellulose, Guarkernmehl), Algen (Alginate, Carrageen), Bakterien (Xanthan) umfasst.

Erfindungsgemäss bevorzugt umfasst die Haftmischung ein Protein in einer Menge von 50-70 Gew.-%, bezogen auf die gesamte Haftmischung. Wie vorstehend ausgeführt wird vorzugsweise ein pflanzliches Protein, Insektenprotein, Zellprotein, einschließlich Einzellerprotein, wie von Hefe, Bakterien, Mikroalgen, Pilzen, fermentierten Produkten, die aus der Fermentation mit einem der oben genannten Organismen stammen, Schimmel und dergleichen, oder eine Mischung verschiedener Proteine eingesetzt. Ein Pflanzenprotein wie Erbsenprotein ist besonders bevorzugt.

Erfindungsgemäss bevorzugt umfasst die Haftmischung weiterhin Gluten in einer Menge von 5-30 Gew.-%, bezogen auf die gesamte Haftmischung.

Gemäss einer besonders bevorzugten Ausführungsform der vorliegenden Erfindung umfasst die Haftmischung weiterhin Transglutaminase in einer Menge von bis zu 5 Gew.-%, bezogen auf die gesamte Haftmischung.

Gemäss einer weiteren bevorzugten Ausführungsform kann es aber auch ausreichend sein, lediglich Wasser als Haftmittel (d.h. einzigem Bestandteil der Haftmischung) auf die Oberfläche des Materialstrangs aufzutragen. Es wurde gefunden, dass in vielen Fällen Wasser allein (gegebenenfalls versetzt mit einem der vorstehend beschriebenen Proteine und vorzugsweise zusätzlich einem Enzym wie Transglutaminase) die nachstehend aufeinander gefalteten Schichten des Materialstrangs zusammenhalten kann und selbst nach Kochen starke Haftung der Schichten aufeinander gewährleistet.

Die Haftmischung kann auf übliche Weise auf den Materialstrang aufgebracht werden. Beispielsweise kann die Haftmischung in einem Behälter zubereitet und/oder gelagert und mittels einer Düse auf den Materialstrang aufgetragen werden. Vorzugsweise wird in dem Auftragebereich das Förderband vor und zurück bewegt, um den Auftragevorgang zu unterstützen.

Gemäss einer besonders bevorzugten Ausführungsform der vorliegenden Erfindung wird auf die aufgetragene erste Haftschicht anschliessend eine Fettschicht und eine zweite Haftschicht auf die Fettschicht aufgetragen. Das Auftragen kann wie vorstehend beschrieben erfolgen, wobei für das Fett ein separater Behälter bereitgestellt wird. Vorzugsweise erfolgt die Auftragung der Fettschicht und der zweiten Haftschicht in einer Dicke von jeweils bis zu 1 mm.

Es kann jedes essbare Fett verwendet werden. Beispielhaft seien Kakaobutter, Kokosfett, Butterfett und Palmkernfett genannt.

Gemäss einer bevorzugten Ausführungsform der vorliegenden Erfindung wird das Fett in Form einer Mischung aufgetragen, welche neben einem der vorstehend genannten Fette Stärke und Wasser enthält. Vorzugsweise enthält die Mischung 40-70 Gew.-% Fett, 20-40 Gew.-% Stärke und den Rest (auf eine Gesamtmenge von 100 Gew.-%) Wasser. Besonders bevorzugt enthält die Mischung 50-60 Gew.-% Fett, 25-35 Gew.-% Stärke und den Rest (auf eine Gesamtmenge von 100 Gew.-%) Wasser. Die Mischung soll weiss sein, um die erfindungsgemäss bevorzugte marmorierte Struktur des Endprodukts zu erzeugen.

Die Haftmischung für die zweite Haftschicht ist üblicherweise wie vorstehend für die erste Haftschicht beschrieben aufgebaut.

In einem nächsten Schritt wird ein Falten des Materialstranges zu einer geschichteten Struktur mit verschiedenen Schichtdicken durchgeführt. Vorzugsweise erfolgt dies durch ungleichmässiges Fallenlassen des Materialstranges von einer ersten Unterlage, vorzugsweise ein Förderband, auf eine weitere Unterlage, vorzugsweise ein Förderband, aufgrund einer variierenden Geschwindigkeit des als erste Unterlage dienenden Förderbandes.

Vorzugsweise wird vor dem Fallenlassen eine Bewegung des Materialstranges induziert, beispielsweise durch eine beschleunigte Bewegung des als Unterlage dienenden Förderbandes.

Der Materialstrang wird vorzugsweise unter Einfluss der Gravitation auf eine weitere Unterlage, vorzugsweise ein anderes Förderband fallengelassen. Hierbei kommt es zu einer ungleichmässigen Faltung des Materialstrangs, so dass ein ungleichmässig gefalteter Materialstrang gebildet wird. Diese ungleichmässige Faltung wird vorzugsweise durch eine variierende Geschwindigkeit des als erste Unterlage dienenden Förderbandes erreicht. Beispielsweise kann das als erste Unterlage dienende Förderband mehrmals, beispielsweise viermal, hin und her bewegt werden (d.h. zur Fallposition hin und wieder weg) und dabei beim Hinbewegen eine grössere Geschwindigkeit haben als beim Wegbewegen. Gleichzeitig ist es bevorzugt, wenn die weitere Unterlage, vorzugsweise ein anderes Förderband, sich mit einer langsameren Geschwindigkeit bewegt als jede Geschwindigkeit der ersten Unterlage. Vorzugsweise hat das als erste Unterlage dienende Förderband bei einer viermaligen Hin- und Herbewegung beim Hinbewegen eine Geschwindigkeit von 2 bis 6 m/min, vorzugsweise 3 bis 5 m/min, und die weitere Unterlage, vorzugsweise ein anderes Förderband, eine um das Vierfache verringerte Geschwindigkeit.

Es ist besonders bevorzugt, dass die Förderrichtung des Förderbandes, auf welches der Materialstrang fällt, koaxial zur Förderrichtung des Förderbands ist, von welchem der Materialstrang herunterfällt. Dadurch wird erreicht, dass der Materialstrang gleichmässig auf sich selbst aufgebracht und eine schichtartige Struktur erhalten wird.

Aufgrund der auf der äusseren Oberfläche befindlichen Haftschicht kommt es zu einem Anhaften von Abschnitten des Materialstrangs, wenn diese beim Fallen zusammenkommen.

Die in diesem Schritt erreichte Faltung des Materialstrangs ist ungleichmässig, d.h. es wird eine derart ungeordnete Schichtstruktur realisiert, dass die erhaltene geschichtete Struktur verschiedene Schichtdicken zwischen den einzelnen Schichtungen aufweist.

Der gefaltete Materialstrang wird auf eine Unterlage mit einer planaren Oberfläche fallengelassen und anschliessend zur nächsten Prozessstufe überführt. Vorzugsweise handelt es sich bei der Unterlage um ein Förderband, mit welchem der herausgeführte Materialstrang direkt zur nächsten Prozessstufe transportiert wird. Wie vorstehend ausgeführt ist es besonders bevorzugt, dass die Förderrichtung des Förderbandes, auf welches der Materialstrang fällt, koaxial zur Förderrichtung des Förderbands ist, von welchem der Materialstrang herunterfällt.

In der nächsten Prozessstufe wird der gefaltete Materialstrang, vorzugsweise mit einem Förderband, horizontal durch einen Spalt zwischen zwei Walzen geführt und dadurch komprimiert.

Es können hierbei herkömmliche Walzen eingesetzt werden, wie sie beispielsweise bei der Teigverarbeitung verwendet werden. Der Spalt zwischen den Walzen sowie die Rotationsgeschwindigkeit der Walzen kann wunschgemäss eingestellt werden, um die gewünschten Produkteigenschaften bereitzustellen. Vorzugsweise ist die Rotationsgeschwindigkeit der Walzen gleich der Fördergeschwindigkeit der Unterlage, vorzugsweise dem Förderband. Vorzugsweise weist der Spalt eine Breite von 2 bis 6 mm auf.

Der so gebildete komprimierte Materialstrang wird von einer weiteren Unterlage, vorzugsweise einem weiteren Förderband aufgenommen.

Gemäss einer besonders bevorzugten Ausführungsform der vorliegenden Erfindung werden die Schritte des ungleichmässigen Faltens und der anschliessenden Komprimierung zweimal nacheinander durchgeführt. In diesem Fall wird der vorstehend gebildete komprimierte Materialstrang diesen weiteren Prozessstufen zugeführt, vorzugsweise mit einem Förderband.

Gemäss einer bevorzugten Ausführungsform der vorliegenden Erfindung wird der vorstehend gebildete komprimierte Materialstrang zunächst zumindest teilweise mit einer weiteren Haftschicht überzogen. Vorzugsweise erfolgt die Auftragung der Haftschicht in einer Dicke von bis zu 1 mm.

Vorzugsweise wird die aufgetragene Haftschicht wiederum aus einer Haftmischung gebildet, die ein Protein, vorzugsweise Erbsenprotein, Gluten und gegebenenfalls Transglutaminase umfasst.

Erfindungsgemäss bevorzugt umfasst die Haftmischung ein Protein in einer Menge von 50-70 Gew.-%, bezogen auf die gesamte Haftmischung. Wie vorstehend ausgeführt wird vorzugsweise ein pflanzliches Protein, Insektenprotein, Zellprotein, einschließlich Einzellprotein, wie von Hefe, Bakterien, Mikroalgen, Pilzen, fermentierten Produkten, die aus der Fermentation mit einem der oben genannten Organismen stammen, Schimmel und dergleichen, oder eine Mischung verschiedener Proteine eingesetzt. Ein Pflanzenprotein wie Erbsenprotein ist besonders bevorzugt.

Erfindungsgemäss bevorzugt umfasst die Haftmischung weiterhin Gluten in einer Menge von 5-30 Gew.-%, bezogen auf die gesamte Haftmischung.

Gemäss einer besonders bevorzugten Ausführungsform der vorliegenden Erfindung umfasst die Haftmischung weiterhin Transglutaminase in einer Menge von bis zu 5 Gew.-%, bezogen auf die gesamte Haftmischung.

Gemäss einer weiteren bevorzugten Ausführungsform kann es aber auch hier ausreichend sein, lediglich Wasser als Haftmittel (d.h. einzigem Bestandteil der Haftmischung), gegebenenfalls versetzt mit einem der vorstehend beschriebenen Proteine und vorzugsweise zusätzlich einem Enzym wie Transglutaminase, auf die Oberfläche des Materialstrangs aufzutragen.

Die Haftmischung kann auf übliche Weise auf den komprimierten Materialstrang aufgebracht werden. Beispielsweise kann die Haftmischung in einem Behälter zubereitet und/oder gelagert und mittels einer Düse auf den komprimierten Materialstrang aufgetragen werden. Vorzugsweise wird in dem Auftragebereich das Förderband vor und zurück bewegt, um den Auftragevorgang zu unterstützen.

Gemäss einer besonders bevorzugten Ausführungsform der vorliegenden Erfindung wird auf die so aufgetragene weitere Haftschicht anschliessend eine weitere Fettschicht und eine weitere Haftschicht auf die Fettschicht aufgetragen. Das Auftragen kann wie vorstehend beschrieben erfolgen, wobei für das Fett ein separater Behälter bereitgestellt wird. Vorzugsweise erfolgt die Auftragung der Fettschicht und der zweiten Haftschicht in einer Dicke von jeweils bis zu 1 mm.

Es kann jedes essbare Fett verwendet werden. Beispielhaft seien Kakaobutter, Kokosfett, Butterfett und Palmkernfett genannt.

Gemäss einer bevorzugten Ausführungsform der vorliegenden Erfindung wird das Fett auch hier in Form einer Mischung aufgetragen, welche neben einem der vorstehend genannten Fette Stärke und Wasser enthält. Vorzugsweise enthält die Mischung 40-70 Gew.-% Fett, 20-40 Gew.-% Stärke und den Rest (auf eine Gesamtmenge von 100 Gew.-%) Wasser. Besonders bevorzugt enthält die Mischung 50-60 Gew.-% Fett, 25-35 Gew.-% Stärke und den Rest (auf eine Gesamtmenge von 100 Gew.-%) Wasser. Die Mischung soll weiss sein, um die erfindungsgemäss bevorzugte marmorierte Struktur des Endprodukts zu erzeugen.

Die Haftmischung für die weitere Haftschicht ist üblicherweise wie vorstehend für die erste Haftschicht beschrieben aufgebaut.

In einem nächsten Schritt wird ein Falten des komprimierten Materialstranges zu einer geschichteten Struktur mit verschiedenen Schichtdicken durchgeführt. Vorzugsweise erfolgt dies durch ungleichmässiges Fallenlassen des Materialstranges von der Unterlage, vorzugsweise Förderband, auf eine weitere Unterlage, aufgrund einer variierenden Geschwindigkeit des als Unterlage dienenden Förderbandes.

Der Materialstrang wird vorzugsweise unter Einfluss der Gravitation auf eine weitere Unterlage fallengelassen. Hierbei kommt es zu einer ungleichmässigen Faltung des Materialstrangs, so dass ein ungleichmässig gefalteter Materialstrang gebildet wird. Diese ungleichmässige Faltung wird vorzugsweise durch eine variierende Geschwindigkeit des als Unterlage dienenden Förderbandes erreicht. Beispielsweise kann das als Unterlage dienende Förderband wie vorstehend beschrieben mehrmals, beispielsweise viermal, hin und her bewegt werden (d.h. zur Fallposition hin und wieder weg) und dabei beim Hinbewegen eine grössere Geschwindigkeit haben als beim Wegbewegen.

Vorzugsweise wird vor dem Fallenlassen eine Bewegung des komprimierten Materialstranges induziert, beispielsweise durch eine beschleunigte Bewegung des als Unterlage dienenden Förderbandes.

Der komprimierte Materialstrang wird vorzugsweise unter Einfluss der Gravitation auf eine weitere Unterlage fallengelassen. Hierbei kommt es zu einer ungleichmässigen Faltung des komprimierten Materialstrangs, so dass ein gefalteter komprimierter Materialstrang gebildet wird.

Aufgrund der auf der äusseren Oberfläche befindlichen Haftschicht kommt es zu einem Anhaften von Abschnitten des komprimierten Materialstrangs, wenn diese beim Fallen zusammenkommen.

Die in diesem Schritt erreichte Faltung des komprimierten Materialstrangs ist ungleichmässig, d.h. es wird eine derart ungeordnete Schichtstruktur realisiert, dass die erhaltene geschichtete Struktur verschiedene Schichtdicken zwischen den einzelnen Schichtungen aufweist.

Es ist besonders bevorzugt, dass die Unterlage, auf welches der komprimierte Materialstrang fällt, ein Walzenspalt von zwei vertikal angeordneten Walzen ist. Es kommt vorzugsweise zu einer Auffaltung des komprimierten Walzenstrangs auf den Walzen, wenn wie erfindungsgemäss bevorzugt die Förderung des Materialstrangs durch den Walzenspalt langsamer erfolgt als das Herunterfallen auf den Walzenspalt.

Anschliessend wird der gefaltete Materialstrang vertikal durch den Spalt zwischen zwei Walzen geführt und dadurch ein zweites Mal komprimiert.

Es können hierbei herkömmliche Walzen eingesetzt werden, wie sie beispielsweise bei der Teigverarbeitung verwendet werden. Der Spalt zwischen den Walzen sowie die Rotationsgeschwindigkeit der Walzen kann wunschgemäss eingestellt werden, um die gewünschten Produkteigenschaften bereitzustellen.

Auf Wunsch können die die Schritte des zufälligen Faltens und der anschliessenden Komprimierung auch öfter als zweimal nacheinander durchgeführt werden, wobei die Durchführung der weiteren Schritte vorzugsweise wie vorstehend beschrieben erfolgt.

Der so gebildete komprimierte Materialstrang wird von einer weiteren Unterlage, vorzugsweise einem weiteren Förderband aufgenommen.

Gemäss einer besonders bevorzugten Ausführungsform der vorliegenden Erfindung wird das vorstehend beschriebene Verfahren kontinuierlich durchgeführt. In diesem Fall wird der erste Verfahrensschritt des Mischens und Knetens und gegebenenfalls Erhitzens in einem Extruder durchgeführt. Bei einem batchartigen Verfahren kann der erste Verfahrensschritt des Mischens und Knetens in einem herkömmlichen Mischer und Kneter (wie vorstehend beschrieben) durchgeführt werden.

Das erfindungsgemässe Verfahren zeichnet sich durch ein einfaches Design aus; es sind keine komplexen Prozessstufen erforderlich. Das erfindungsgemässe Verfahren kann standardisiert und mit hohem Durchsatz betrieben werden. Das erfindungsgemässe Verfahren ist kostengünstig.

Mit dem erfindungsgemässen Verfahren kann ein alternatives Lebensmittelprodukt, vorzugsweise alternatives Fleischprodukt, erhalten werden.

Das erfindungsgemässe alternative Lebensmittelprodukt, vorzugsweise alternative Fleischprodukt, zeichnet sich durch eine mehrschichtige gefaltete, komprimierte Struktur aus.

Wie vorstehend beschrieben ist vorzugsweise eine erste Schicht eine extrudierte Schicht, welche ein Pflanzenprotein, vorzugsweise Erbsenprotein und Wasser umfasst, vorzugweise in einem Verhältnis von 50-70 Gew.-& Protein zu 30-50 Gew.-% Wasser.

Vorzugsweise ist eine zweite Schicht eine Fettschicht, welche über eine wie vorstehend beschrieben aufgebaute Haftschicht mit der ersten Schicht verbunden ist.

Die vorliegende Erfindung betrifft weiterhin ein alternatives Lebensmittelprodukt, vorzugsweise alternatives Fleischprodukt, erhältlich durch ein Verfahren gemäss der vorliegenden Erfindung. Die vorstehenden Ausführungen gelten analog für das alternative Lebensmittelprodukt.

Gemäss einer bevorzugten Ausführungsform der vorliegenden Erfindung wird das alternative Lebensmittelprodukt ohne Einsatz eines Extruders und insbesondere nicht über ein high-moisture-Extrusionsverfahren (bei welchem hohe Temperaturen und hohe mechanische Kräfte angelegt werden) hergestellt. Das gemäss dieser bevorzugten Ausführungsform erhältliche alternative Lebensmittelprodukt weist nicht die gerichtete Struktur (vor allem nicht die gerichtete Faserstruktur) auf, welche durch das high-moisture-Extrusionsverfahren realisiert wird.

Die durch das erfindungsgemässe Verfahren erhältliche schichtartige Struktur entspricht vom Aussehen und der Textur einem Rindersteak. Gemäss einer bevorzugten Ausführungsform der vorliegenden Erfindung handelt es sich bei dem alternative Lebensmittelprodukt somit um ein steakartiges alternatives Fleischprodukt. Es kann sich aber auch um ein alternatives Fischprodukt handeln.

Nachdem das erfindungsgemässe alternative Lebensmittelprodukt mit dem Verfahren der vorliegenden Erfindung hergestellt wurde, kann es einem oder mehreren Nachbearbeitungsschritten unterzogen werden. Für die Durchführung solcher Nachbearbeitungsschritte können eine oder mehrere zusätzliche Einheiten vorgesehen sein.

Gemäss einer bevorzugten Ausführungsform der vorliegenden Erfindung kann die mindestens eine Einheit, die der Vorrichtung zur Durchführung weiterer Verarbeitungsschritte nachgeschaltet ist, aus der Gruppe ausgewählt werden, die aus einer Schneideeinheit, einer Kühleinheit, einer Inkubationseinheit, einer Injektionseinheit und einer Endbearbeitungseinheit besteht. Solche Einheiten sind aus dem Stand der Technik bekannt. Jede derartige Einheit ist für die vorliegende Erfindung geeignet.

Die vorliegende Erfindung wird nachfolgend anhand von nicht einschränkenden Ausführungsbeispielen und Figuren näher beschrieben. Es zeigen:
- Fig.1: eine schematische Darstellung des erfindungsgemässen Verfahrens

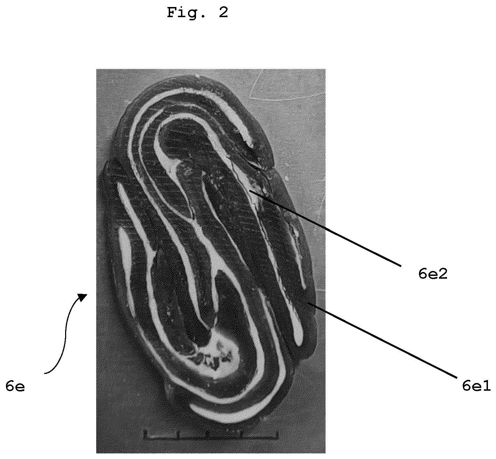

- Fig. 2: eine Abbildung eines erfindungsgemässen alternativen Lebensmittelprodukts
- Fig. 3: eine vergrösserte Darstellung eines Materialstrangs, der mit einer Einheit zur Durchführung einer Oberflächenbehandlung behandelt wurde

In den Figuren bezeichnen gleiche Bezugszeichen gleiche Elemente.

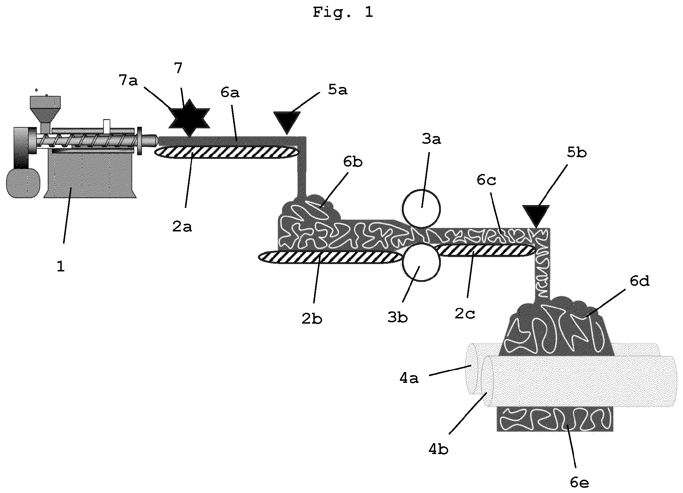

In Fig. 1 ist eine schematische Darstellung des erfindungsgemässen Verfahrens gezeigt.

Ein Ausgangsgemisch wird in einen Einlass einer Vorrichtung 1, hier eines Extruders gegeben. Das Ausgangsgemisch umfasst ein Pflanzenprotein, vorzugsweise Erbsenprotein und Wasser, vorzugweise in einem Verhältnis von 50-70 Gew.-& Protein zu 30-50 Gew.-% Wasser. Es können noch weitere Zusatzstoffe wie beispielsweise ein Farbstoff zugegeben werden.

In dem Extruder 1 wird das Ausgangsgemisch zu einer teigartigen Masse verarbeitet. Diese wird am Ausgang des Extruders 1 als Materialstrang 6a herausgeführt und auf ein Förderband 2a geleitet, wobei er sich auf Umgebungstemperatur abkühlt. Der Materialstrang 6a ist bandförmig und hat eine Dicke von vorzugsweise etwa 1 bis 2 mm.

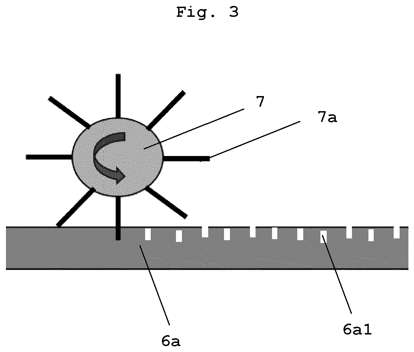

In der Ausführungsform gemäss Fig. 1 ist eine Einheit 7 zur Durchführung einer Oberflächenbehandlung dargestellt. Diese Einheit 7 befindet sich zwischen dem Auslass des Extruders 1 (vorzugsweise einer Düse) und dem Bereich 5a zum Auftragen einer Haftschicht auf den Materialstrang 6a. In Fig. 1 ist das Oberflächenprofil der Einheit 7 schematisch durch Zacken 7a dargestellt. Das Oberflächenprofil der Einheit 7 ist aber nicht hierauf eingeschränkt und kann beispielweise ein aus Rillen aufgebautes Profil sein. Wie nachstehend in Fig. 3 näher gezeigt kann mit der Einheit 7 in der Oberfläche des Materialstrangs 6a ein entsprechendes, in Fig. 1 nicht gezeigtes Profil (beispielsweise aus Löchern oder Rinnen) erzeugt werden, in welchem Fett aufgenommen werden kann.

In einem Bereich 5a des Förderbands 2a wird in der Ausführungsform gemäss Fig. 1 eine Haftschicht auf den Materialstrang 6a aufgetragen. In diesem Bereich wird das Förderband 2a vorzugsweise hin und her (in Fig. 1 nach links und rechts) bewegt, um die gewünschte Auftragung in einer Dicke von bis zu 1 mm zu erreichen. Die Haftschicht wird aus einer Haftmischung gebildet, die ein Protein, vorzugsweise Erbsenprotein, Gluten und gegebenenfalls Transglutaminase, oder alternativ ausschliesslich Wasser umfasst.

Auf diese Haftschicht wird in dem gleichen Bereich 5a des Förderbands 2a eine Fettschicht in einer Dicke von bis zu 1 mm aufgebracht. Es kann ein herkömmliches essbares Fett oder die vorstehend beschriebene Mischung aus Fett, Stärke und Wasser verwendet werden.

Auf diese Fettschicht wird in dem gleichen Bereich 5a des Förderbands 2a eine zweite Haftschicht aufgetragen, die in ihrer Zusammensetzung der vorgängig aufgetragenen Haftschicht entspricht.

Der beschichtete Materialstrang 6a wird anschliessend unter Einfluss der Gravitation auf ein anderes Förderband 2b fallengelassen. Hierbei kommt es zu einer Faltung des Materialstrangs zu einer geschichteten Struktur mit verschiedenen Schichtdicken, so dass ein ungleichmässig gefalteter Materialstrang 6b gebildet wird. Dies wird dadurch erreicht, dass das Förderband 2a mit einer variierenden Geschwindigkeit bewegt wird. Beispielsweise kann das Förderband 2a viermal hin und her bewegt werden (d.h. zur Fallposition hin und wieder weg) und dabei beim Hinbewegen eine grössere Geschwindigkeit von 2 bis 6 m/min, vorzugsweise 3 bis 5 m/min, haben als beim Wegbewegen. Gleichzeitig ist es bevorzugt, wenn das Förderband 2b sich mit einer um das Vierfache verringerten Geschwindigkeit bewegt als jede Geschwindigkeit des Förderbands 2a.

Mit dem Förderband 2b wird der gefaltete Materialstrang 6b horizontal durch einen Spalt zwischen zwei Walzen 3a und 3b geführt und dadurch komprimiert. Der gebildete komprimierte Materialstrang 6c wird von einem weiteren Förderband 2c aufgenommen.

In einem Bereich 5b des Förderbands 2c wird in der Ausführungsform gemäss Fig. 1 eine Haftschicht auf den komprimierten Materialstrang 6c aufgetragen. In diesem Bereich 5b wird das Förderband 2c vorzugsweise hin und her (in Fig. 1 nach links und rechts) bewegt, um die gewünschte Auftragung in einer Dicke von bis zu 1 mm zu erreichen. Die Haftschicht wird aus einer Haftmischung gebildet, die ein Protein, vorzugsweise Erbsenprotein, Gluten und gegebenenfalls Transglutaminase, oder alternativ ausschliesslich Wasser umfasst.

Auf diese Haftschicht wird in dem gleichen Bereich 5b des Förderbands 2c eine Fettschicht in einer Dicke von bis zu 1 mm aufgebracht. Es kann ein herkömmliches essbares Fett oder die vorstehend beschriebene Mischung aus Fett, Stärke und Wasser verwendet werden.

Auf diese Fettschicht wird in dem gleichen Bereich 5b des Förderbands 2c eine zweite Haftschicht aufgetragen, die in ihrer Zusammensetzung der vorgängig aufgetragenen Haftschicht entspricht.

Der beschichtete Materialstrang wird anschliessend unter Einfluss der Gravitation fallengelassen und zu einem zufällig gefalteten Materialstrang 6d gefaltet, und anschliessend vertikal in einen Spalt zwischen zwei Walzen 4a und 4b geführt und dadurch komprimiert. Der gebildete komprimierte Materialstrang 6e ist das erfindungsgemäss alternative Lebensmittelprodukt.

In Fig. 3 ist eine vergrösserte Darstellung eines Materialstrangs 6a gezeigt, der mit einer Einheit 7 zur Durchführung einer Oberflächenbehandlung behandelt wurde. Es ist zu erkennen, dass in der beispielhaften Ausführungsform gemäss Fig. 3 durch die Zacken 7a der während des Betriebs rotierenden Einheit 7 Löcher 6a1 in der Oberfläche des Materialstrangs 6a erzeugt werden. In diese Löcher 6a1 kann anschliessend Fett oder eine fetthaltige Mischung eingeführt werden.

## Patentansprüche

1. Verfahren zur Herstellung eines alternativen Lebensmittelprodukts, umfassend die Schritte
a) Behandeln eines Ausgangsgemisches in einer Vorrichtung (1), vorzugsweise einem Extruder, durch Mischen und Kneten und gegebenenfalls Erhitzen,
b) Herausführen eines Materialstranges (6a) aus der Vorrichtung (1), vorzugsweise durch eine Düse oder einen Walzenspalt,
c) Gegebenenfalls Überziehen des Materialstranges (6a, 6c) mit einer Haftschicht,
d) Aufbringen einer Fettschicht auf den Materialstrang (6a, 6c),
e) Falten des Materialstranges (6a) zu einer geschichteten Struktur mit verschiedenen Schichtdicken,
f) Komprimieren des in e) erhaltenen gefalteten Materialstranges (6b, 6d).

2. Verfahren nach Anspruch 1, **dadurch gekennzeichnet, dass** der in Schritt b) herausgeführte Materialstrang (6a) eine Dicke im Bereich von 0.5 mm bis 5 mm, vorzugsweise 0.7 mm bis 4 mm, besonders bevorzugt 1 mm bis 2 mm aufweist.

3. Verfahren nach Anspruch 1 oder 2, **dadurch gekennzeichnet, dass** der Schritt e) durch Fallenlassen des Materialstranges (6a, 6c) von einer ersten Unterlage, vorzugsweise einem Förderband, auf eine weitere Unterlage, vorzugsweise ein Förderband (2b), aufgrund einer variierenden Geschwindigkeit der ersten Unterlage durchgeführt wird.

4. Verfahren nach einem der Ansprüche 1 bis 3, **dadurch gekennzeichnet, dass** der Materialstrang (6a, 6c) im Schritt c) mit einer erste Haftschicht überzogen wird, anschliessend im Schritt d) mit einer Fettschicht auf der ersten Haftschicht und anschliessend einer zweiten Haftschicht auf der Fettschicht überzogen wird.

5. Verfahren nach einem der Ansprüche 1 bis 4, **dadurch gekennzeichnet, dass** der Schritt f) durch Hindurchführen des gefalteten Materialstranges (6b, 6d) durch einen zwischen einem Walzenpaar (3a, 3b; 4a, 4b) befindlichen Spalt durchgeführt wird.

6. Verfahren nach einem der Ansprüche 1 bis 5, **dadurch gekennzeichnet, dass** der Materialstrang (6a, 6b, 6c) zwischen den Verfahrensschritten b) bis f) mittels Förderbändern (2a, 2b, 2c) transportiert wird.

7. Verfahren nach einem der Ansprüche 1 bis 6, **dadurch gekennzeichnet, dass** die Schritte d) bis f), gegebenenfalls mit Schritt c) vor dem ersten Schritt d) oder jedem Schritt d), zweimal nacheinander durchgeführt werden.

8. Verfahren nach Anspruch 7, **dadurch gekennzeichnet, dass** bei der ersten Durchführung des Schritts f) der gefaltete Materialstrang (6b) horizontal durch den Walzenspalt geführt wird, und bei der zweiten Durchführung des Schritts f) der gefaltete Materialstrang (6d) vertikal durch den Walzenspalt geführt wird.

9. Verfahren nach einem der Ansprüche 1 bis 8, **dadurch gekennzeichnet, dass** das Ausgangsgemisch ein Pflanzenprotein, vorzugsweise Erbsenprotein und Wasser umfasst, vorzugweise in einem Verhältnis von 50-70 Gew.-& Protein zu 430-50 Gew.-% Wasser.

10. Verfahren nach einem der Ansprüche 1 bis 9, **dadurch gekennzeichnet, dass** die vor dem Schritt c) aufgetragene Haftschicht aus einer Haftmischung gebildet wird, die ein Protein, vorzugsweise Erbsenprotein, Gluten und gegebenenfalls Transglutaminase, oder ausschliesslich Wasser umfasst.

11. Alternatives Lebensmittelprodukt (6e), vorzugsweise alternatives Fleischprodukt, erhältlich durch ein Verfahren gemäss einem der Ansprüche 1 bis 10.

12. Alternatives Lebensmittelprodukt nach Anspruch 11, **dadurch gekennzeichnet, dass** das Produkt (6e) eine mehrschichtige gefaltete, komprimierte Struktur aufweist.

13. Alternatives Lebensmittelprodukt nach Anspruch 12, **dadurch gekennzeichnet, dass** eine erste Schicht (6e1) eine extrudierte Schicht ist, welche ein Pflanzenprotein, vorzugsweise Erbsenprotein und Wasser umfasst, vorzugweise in einem Verhältnis von 650-70 Gew.-& Protein zu 30-50 Gew.-% Wasser, und eine zweite Schicht (6e2) eine Fettschicht ist, welche über eine Haftschicht mit der ersten Schicht verbunden ist.

14. Alternatives Lebensmittelprodukt nach Anspruch 13, **dadurch gekennzeichnet, dass** die Haftschicht aus einer Haftmischung gebildet ist, die ein Protein, vorzugsweise Erbsenprotein, Gluten und gegebenenfalls Transglutaminase, oder ausschliesslich Wasser umfasst.

15. Alternatives Lebensmittelprodukt nach einem der Ansprüche 11 bis 14, **dadurch gekennzeichnet, dass** es sich um ein steakartiges alternatives Fleischprodukt handelt.
